(19) Europäisches Patentamt
European Patent Office
Office européen des brevets

(11) **EP 0 730 615 B1**

(12) **EUROPÄISCHE PATENTSCHRIFT**

(45) Veröffentlichungstag und Bekanntmachung des Hinweises auf die Patenterteilung:
**06.09.2000 Patentblatt 2000/36**

(51) Int. Cl.[7]: **C08G 18/67**, C08G 18/42,
C08F 290/06, C09J 175/16

(21) Anmeldenummer: **95901405.1**

(22) Anmeldetag: **22.11.1994**

(86) Internationale Anmeldenummer:
**PCT/EP94/03848**

(87) Internationale Veröffentlichungsnummer:
**WO 95/14725 (01.06.1995 Gazette 1995/23)**

(54) **GERUCHSARME KLEBSTOFFZUSAMMENSETZUNG UMFASSEND URETHANGRUPPEN ENTHALTENDE (METH)ACRYLATE**

LOW-ODOUR ADHESIVE COMPOSITION COMPRISING URETHANE GROUP CONTAINING (METH)ACRYLATE

COMPOSITION D'ADHESIF PRATIQUEMENT INODORE COMPRENANT DES (METH)ACRYLATES RENFERMANT DES GROUPEMENTS URETHANNE

(84) Benannte Vertragsstaaten:
**AT BE CH DE DK ES FR GB IT LI NL PT SE**

(30) Priorität: **26.11.1993 DE 4340095**

(43) Veröffentlichungstag der Anmeldung:
**11.09.1996 Patentblatt 1996/37**

(73) Patentinhaber:
**Henkel Kommanditgesellschaft auf Aktien
40191 Düsseldorf (DE)**

(72) Erfinder:
• **HUVER, Thomas
  D-40625 Düsseldorf (DE)**
• **FRIESE, Carsten
  D-22559 Hamburg (DE)**
• **EMMERLING, Winfried
  D-41469 Neuss (DE)**
• **KUX, Michael
  D-40789 Monheim (DE)**
• **MOTZKAT, Kerstin
  D-46149 Oberhausen (DE)**

(56) Entgegenhaltungen:
EP-A- 0 539 030          FR-A- 2 508 924
US-A- 4 164 486          US-A- 4 452 964

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft eine geruchsarme Klebstoffzusammensetzung auf der Basis von Urethangruppen enthaltenden (Meth)acrylaten sowie deren Verwendung.

Die Erfindung betrifft ferner ein Polyurethan(meth)acrylat auf der Basis von speziellen Polyesterdiolen, welche ebenfalls Bestandteile der erfindungsgemäßen Klebstoffzusammensetzungen sein können.

Methylmethacrylat ist das am meisten verwendete Monomer in handelsüblichen, radikalisch aushärtenden Reaktionsklebstoffen. Trotz der guten Klebeeigenschaften dieser Systeme wird deren Einsatz aus Geruchsgründen zunehmend eingeschränkt. Auch die flüssigen Ester der Acryl- oder Methacrylsäure mit längeren aromatischen oder aliphatischen Seitenketten haben alle einen intensiven Geruch und/oder schlechte Adhäsionseigenschaften.

Die Entwicklung von geruchsarmen Klebstoffzusammensetzungen ist daher von großem Interesse, wobei die Zusammensetzung bei Raumtemperatur flüssig oder pastös sein muß.

Die EP-A-0 542 219 beschreibt Polyurethan(meth)acrylate auf der Basis von polyfunktionellen Isocyanaten und wenigstens 8 Kohlenstoffatome enthaltenden speziellen Diolen und insbesondere 2-Ethyl-3-propyl-1,5-pentandiol und/oder dessen Derivate sowie deren Verwendung in Kombination mit einem Radikalinitiator als Beschichtung, Zusatz zu Tinten, Dichtungsmaterial oder Klebstoff. Die EP-A-0 542 219 beschreibt ferner die Kombination der Polyurethan(meth)acrylate mit anderen Acrylaten und Methacrylaten.

Die EP-A-539030 beschreibt Beschichtungsmaterialien für optische Fasern. Diese Beschichtungsmaterialien werden durch Strahlung gehärtet. Neben den ethylenisch ungesättigten Urethanoligomeren und monofünktionellen aromatischen Acrylaten enthalten diese Zusammensetzungen Photoinitiatoren, die die Polymerisation unter Einwirkung von UV-Strahlung auslösen.

Zweikomponentige Klebstoffzusammensetzungen bei denen die eine Komponente eine Beschleunigerkomponente und die zweite Komponente eine Starterkomponente enthalten bzw. einkomponentige aerob härtbare Klebstoffzusammensetzungen, die eine Hydrazonverbindung als Starter enthalten, sind in der EP-A-539030 weder beschrieben noch gehen sie in naheliegender Weise daraus hervor.

Die US-A-4164468 beschreibt NCO-freie strahlungshärtbare Prepolymere die das Reaktionsprodukt eines organischen Diisocyanates mit einem niedermolekularen hydroxyfunktionellen ungesättigten Monomeren sowie einem Polyesterpolyol mit 2 bis 8 Hydroxylgruppen pro Molekül sind. Gemäß den Angaben der Schrift können diese Zusammensetzungen durch Bestrahlung mit UV-Licht, Röntgenstrahlung, Gammastrahlung oder Elektronenstrahlung gehärtet werden. Diese Zusammensetzungen müssen daher 0,1 bis 10 Gewichtsteile eines Photoinitiators enthalten.

Zweikomponentige Zusammensetzungen bei denen die erste Komponente eine Beschleunigerkomponente und die zweite Komponente eine Starterkomponente enthält bzw. einkomponentige aerob härtbare Zusammensetzungen sind in der US-A-4164468 weder beschrieben noch lassen sie sich in naheliegender Weise aus der Lehre dieser Schrift herleiten.

Die DE-A-3224811 (entsprechend der FR-A-2508924) beschreibt Klebstoffmassen, insbesondere zum Dichten, enthaltend mindestens eine Polyesterurethanmethacrylatmasse und ein frei radikalisches Katalysatorsystem. Es werden Beispiele zur Durchführung der frei radikalischen Polymerisation aufgeführt, genannt werden UV-Bestrahlung und Erwärmung oder bei geeigneter Wahl des frei radikalischen Katalysatorsystems auch die anaerobe Härtung, d.h. Härtung bei Ausschluß von Sauerstoff Zweikomponentige Systeme bzw. Einkomponentige, aerob (unter Zutritt von Sauerstoff) härtbare Klebstoffsysteme sind in der DE-A-3224811 weder beschrieben noch sind sie durch die Lehre dieser Schrift nahegelegt.

Die US-A-4452964 beschreibt verflüssigbare Reaktionsprodukte eines Polyols eines organischen Polyisocyanats und einer hydroxyfunktionellen ethylenisch ungesättigten Verbindung in Kombination mit einem organischen Peroxid geeignet zur Herstellung von verschiedenartigen Artikeln wie Automobilteilen im Spritzgußverfahren. Es handelt sich bei diesen Materialien um hitzehärtende Zusammensetzungen, die bei Temperaturen von etwa 150°C ausgehärtet werden sollen.

Die EP-A-241027 beschreibt eine Methode zur Kaschierung bzw. zum Furnieren von Profilen mit Klebstoffzusammensetzungen enthaltend ein Epoxidharz oder eine Isocyanatverbindung sowie ein Härtungsagenz für das Epoxidharz oder die Diisocyanatverbindung sowie eine photopolymerisierbare Vinylverbindung. Die Verfahrensschritte beinhalten ein Bestrahlen der Klebstoffzusammensetzung auf dem Substrat gefolgt von einem Laminieren des Furniers oder der Folie auf das Substrat gefolgt von einem Erwärmen zum Aushärten der Klebstoffzusammensetzung.

Zweikomponentige Klebstoffzusammensetzungen bzw. einkomponentige aerob härtbare Klebstoffzusammensetzungen werden nicht genannt.

Die WO-A-86/01153 und die US-A-4 600 640 beschreiben Klebstoffe zum Verbinden einer dünnen Glasplatte mit einem thermoplastischen Substrat unter Verwendung einer lösungsmittelfreien UV-härtbaren Klebstoffzusammensetzung, die ein (Meth)acrylat-Monomeres enthält, deren Estergruppe eine Urethangruppe enthält. Ferner sind Urethan(meth)acrylate der allgemeinen Formel

$$CH_2=CR'-C(=O)-O-R^6-O-C(=O)-NH-R^7$$

und Polyurethan(meth)acrylate der allgemeinen Formel

$$(CH_2=CR'-C(=O)-O-R^2-O-C(=O)-NH-)_n \ Q$$

beschrieben.

$R^6$ bzw. $R^2$ ist beispielsweise eine Methylen-, Ethylen- oder Propylengruppe, R' ist eine Methylgruppe oder Wasserstoff, $R^7$ bzw. Q ist eine aliphatische, cycloaliphatische oder aromatische Gruppe. Als besonders bevorzugt als Klebstoff werden 2-Acryloyloxyethyl-N-phenylcarbamat, 2-Methacryloyloxypropyl-N-phenylcarbamat, 2-Acryloyloxypropyl-N-phenylcarbarmat und Acryloyloxyethyl-N-n-butylcarbamat erwähnt.

Die DE-A-27 27 109 beschreibt UV-härtbare Massen aus einem Gemisch aus einem eine Urethangruppe enthaltenden Monoacrylat und einem Polyurethan(meth)acrylat. Die gehärteten Massen weisen dabei hinsichtlich ihrer Zähigkeitseigenschaften ausgezeichnete Beständigkeit gegen tropische Feuchtigkeit auf.

Bei den Polyurethan(meth)acrylaten handelt es sich um Umsetzungsprodukte von Hydroxypropylacrylat oder - Methacrylat oder Hydroxyethylacrylat mit Hexamethylen-, Isophoron- oder Toluendiisocyanat, bei den Monoacrylaten solche mit Phenylisocyanat.

Die US-A-4 439 600 beschreibt eine Zusammensetzung aus (A) einem Reaktionsprodukt aus einem Polyesterdiol (aus Adipinsäure und Diethylenglykol) und einem aliphatischen oder aromatischen Diisocyanat und (B) einem Comonomer, welches ein Reaktionsprodukt aus einem Isocyanat und Hydroxyethylmethacrylat (HEMA) oder 2-Hydroxypropylmethacrylat oder 2-Hydroxypropylacrylat ist. Die Endprodukte zeigen besondere Benetzungs-, Quell- und Klebeeigenschaften sowie eine geringe Flüchtigkeit.

Davon ausgehend war es eine Aufgabe der vorliegenden Erfindung geruchsarme Klebstoffzusammensetzungen auf der Basis von urethangruppenhaltigen (Meth)acrylaten zur Verfügung zu stellen, die flüssig oder pastös sind und deren ausgehärtete Massen eine besondere Feuchtebeständigkeit (Hydrolysebeständigkeit) aufweisen. Die Klebstoffzusammensetzungen sollten ferner lagerstabil und für ein- und zweikomponentige Klebstoffsysteme geeignet sein und auf Glas, Holz, Papier, Metallen und Kunststoffen eine gute Adhäsion sowie zähelastifizierende Eigenschaften aufweisen.

Die erfindungsgemäße Lösung der Aufgabe ist den Ansprüchen zu entnehmen. Sie besteht im wesentlichen in der Bereitstellung Zweikomponentiger oder einkomponentig aerob härtbarer Klebstoffzusammensetzungen enthaltend ein Aktivator-System für radikalische Polymerisationen und eine radikalische polymerisierbare Verbindung der all-gemeinen Formel II

$$[H_2C=CR^1-C(=O)-O-R^2-O-C(=O)-NH-Q-NH-C(=O)]_2[\{-O-R^{4a}-O-C(=O)-NH-Q'-NH-C(=O)\}_m-O-R^{4a}-O-] \quad (II)$$

worin

m = 0 bis 10,

$R^1$ = Wasserstoff oder eine Methylgruppe,

$R^2$ = eine lineare oder verzweigte Alkylgruppe mit 2 bis 6 Kohlenstoffatomen oder ein Alkylenoxid mit 4 bis 21 Kohlenstoffatomen ist,

Q und Q' unabhängig voneinander 6 bis 18 Kohlenstoffatome enthaltende aromatische, aliphatische oder cycloaliphatische Gruppen sind, die sich von dem zugrundeliegenden Diisocyanat oder Diisocyanatgemischen ableiten und

$R^{4a}$ von einem Polyesterdiol mit einem C:O-Verhältnis von > 2,6, einem C:H-Verhältnis von < 10 und einem Molekulargewicht von 1000-20000 abgeleitet ist.

Gegenstand der vorliegenden Erfindung ist eine Zweikomponentige Klebstoffzusammensetzung bestehend aus

a) einer ersten Komponente, die eine Beschleunigerkomponente und eine radikalische polymerisierbare Verbindung der allgemeinen Formel II

$$[H_2C=CR^1-C(=O)-O-R^2-O-C(=O)-NH-Q-NH-C(=O)]_2[\{-O-R^{4a}-O-C(=O)-NH-Q'-NH-C(=O)\}_m-O-R^{4a}-O-] \quad (II)$$

enthält und

b) einer zweiten Komponente, die eine Starterkomponente, enthaltend mindestens eine Peroxidverbindung oder eine Hydrazonverbindung, und ggf. eine radikalische polymerisierbare Verbindung der allgemeinen Formel II

$$[H_2C=CR^1-C(=O)-O-R^2-O-C(=O)-NH-Q-NH-C(=O)]_2[\{-O-R^{4a}-O-C(=O)-NH-Q'-NH-C(=O)\}_m-O-R^{4a}-O-] \qquad (II)$$

enthält
worin

m = 0 bis 10, $R^1$ = Wasserstoff oder eine Methylgruppe,

$R^2$ = eine lineare oder verzweigte Alkylgruppe mit 2 bis 6 Kohlenstoffatomen oder ein Alkylenoxid mit 4 bis 21 Kohlenstoffatomen ist,

Q und Q' unabhängig voneinander 6 bis 18 Kohlenstoffatome enthaltende aromatische, aliphatische oder cycloaliphatische Gruppen sind, die sich von dem zugrundeliegenden Diisocyanat oder Diisocyanatgemischen ableiten und

$R^{4a}$ von einem Polyesterdiol mit einem C:O-Gewichtsverhältnis von > 2,6, einem C:H-Gewichtsverhältnis von < 10 und einem Molekulargewicht von 1000 - 20000 abgeleitet ist.

Ein weiterer Gegenstand der Erfindung ist eine Einkomponentige aerob härtbare Klebstoffzusammensetzung enthaltend ein Aktivatorsystem auf der Basis mindestens einer Hydrazonverbindung als Starter oder Hauptkomponente und eine radikalische polymerisierbare Verbindung der allgemeinen Formel II

$$[H_2C=CR^1-C(=O)-O-R^2-O-C(=O)-NH-Q-NH-C(=O)]_2[\{-O-R^{4a}-O-C(=O)-NH-Q'-NH-C(=O)\}_m-O-R^{4a}-O-] \qquad (II)$$

worin

m = 0 bis 10,
$R^1$ = Wasserstoff oder eine Methylgruppe,
$R^2$ = eine lineare oder verzweigte Alkylgruppe mit 2 bis 6 Kohlenstoffatomen oder ein Alkylenoxid mit 4 bis 21 Kohlenstoffatomen ist,
Q und Q' unabhängig voneinander 6 bis 18 Kohlenstoffatome enthaltende aromatische, aliphatische oder cycloaliphatische Gruppen sind, die sich von dem zugrundeliegenden Diisocyanat oder Diisocyanatgemischen ableiten und
$R^{4a}$ von einem Polyesterdiol mit einem C:O-Gewichtsverhältnis von > 2,6, einem C:H-Gewichtsverhältnis von < 10 und einem Molekulargewicht von 1000 - 20000 abgeleitet ist.

Zusätzlich kann die Klebstoffzusammensetzung eine oder mehrere der radikalisch polymerisierbaren Verbindungen (A) und/oder (B) der allgemeinen Formel:

$$(H_2C=CR^1-C(=O)-O-R^2-O-C(=O)-NH-)_n R^3 \qquad (I)$$

enthält, worin

$R^1$ =     Wasserstoff oder eine Methylgruppe,
$R^2$ =     eine lineare oder verzweigte Alkylgruppe mit 2 bis 6 Kohlenstoffatomen oder Alkylenoxide mit 4 bis 21 Kohlenstoffatomen und
n =     1, 2 oder 3 ist,

(A) wobei $R^3$ für n = 1 ist:

- eine Arylgruppe mit 6 bis 18 Kohlenstoffen,
- geradkettige oder verzweigte Alkylgruppe mit 1 bis 18 Kohlenstoffatomen oder
- Cycloalkylgruppe mit 3 bis 12 Kohlenstoffatomen;

(B) $R^3$ für n = 2 ist:

$$[-Q-NH-C(=O)]_2[\{-O-R^4-O-C(=O)-NH-Q'-NH-C(=O)\}_m-O-R^4-O-]$$

wobei m= 0 bis 10 ist und

R$^4$

    a) ein Polycaprolactondiol-Rest

    b) ein Polytetrahydrofurfuryldiol-Rest oder

R$^3$    für n = 3 ist:

$$[\text{-Q-NH-C(=O)-O-}((CH_2)_5\text{-C(-O)})_p\text{-}]_3\ R^5,$$

wobei R$^5$ ein Triol-Rest eines 3 bis 6 Kohlenstoffatome enthaltenden, linearen oder verzweigten dreiwertigen Alkohols und p = 1 bis 10 ist und

Q und Q' unabhängig voneinander 6 bis 18 Kohlenstoffatome enthaltende aromatische, aliphatische oder cycloaliphatische Gruppen sind, die sich von Diisocyanaten, oder Diisocyanatgemischen ableiten,
sowie gegebenenfalls ein oder mehrere (Meth)acrylat-Comonomere (C),
wobei die Zusammensetzung

-     0-80 Gew.-% einer oder mehrerer der Verbindungen (B) und 100-20 Gew.-% einer oder mehrerer der Verbindungen (A) oder 100-20 Gew.-% eines Gemisches einer oder mehrerer der Verbindungen (A) und (C), oder

-     2-80 Gew.-% einer oder mehrerer der Verbindungen (B) und 98-20 Gew.-% einer oder mehrerer der Verbindungen (C), jeweils bezogen auf die Gesamtmenge (A)+(B)+(C), enthält.

Die Verbindungen der Formel (I) sind herstellbar nach im Stand der Technik an sich bekannten Verfahren durch Umsetzung eines in der Estergruppe Hydroxylgruppen enthaltenden Acrylates (R$^1$=H) oder Methacrylates (R$^1$=CH$_3$) mit Isocyanatgruppen enthaltenden Verbindungen unter Bildung einer Urethangruppe.
Bei den Acrylaten oder Methacrylaten handelt es sich erfindungsgemäß um Hydroxyalkylacrylate oder -Methacrylate, wobei die Alkylgruppen linear oder verzweigt sein können und zwischen 2 und 6 Kohlenstoffatome enthalten. Gemäß der Erfindung können auch die Ester von Acrylsäure und Methacrylsäure mit Polyethylenglykol und/oder Polypropylenglykol eingesetzt werden. Derartige Acrylate oder Methacrylate enthalten 4 bis 21 Kohlenstoffatome in der Estergruppe, entsprechend 2 bis 10 Ethylenoxideinheiten und 1 bis 7 Propylenoxideinheiten. Die Herstellung derartiger Ester ist dem Fachmann bekannt.

Komponente (A):

Urethan(meth)acrylate der Formel (I) für n = 1 sind bekannt und können nach bekannten Verfahren aus den zugrundeliegenden Isocyanaten durch Umsetzung mit den entsprechenden Hydroxylgruppen enthaltenden (Meth)acrylaten der allgemeinen Formel

$$H_2C=CR^1\text{-C(=O)-O-}R^2\text{-OH}$$

erhalten werden.
Derartige Verfahren sind in der WO-A-86/01153 oder der US-A-4 439 600 beschrieben.
Geeignete Acrylate oder Methacrylate sind solche, für die R$^2$ eine Ethylen-, Propylen-, Isopropylen-, n-Butylen-, Isobutylen-Gruppe oder 4-7 Ethylenoxid- oder Propylenoxideinheiten enthalten.
Bevorzugt für die Umsetzung der Isocyanate mit den Hydroxylgruppen tragenden Acrylaten oder Methacrylaten werden jedoch Hydroxyethylacrylat, Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexylacrylat, 6-Hydroxyhexylmethacrylat, Polyethylenglykolacrylat, Polyethylenglykolmethacrylat, Polypropylenglykolacrylat und Polypropylenglykolmethacrylat.
Bei den geradkettigen oder verzweigten Alkylgruppen mit 1 bis 8 Kohlenstoffatomen für R$^3$ handelt es sich insbesondere um Methyl-, Ethyl-, Propyl-, Isopropyl-, n-Butyl-, Isobutyl-, tert.-Butyl-, Pentyl-, Isopentyl-, Neopentyl- oder die Hexylgruppe.
Bei den Cycloalkylgruppen mit 3 bis 12 Kohlenstoffatomen handelt es sich vorzugsweise um solche, die ausgewählt sind aus der Cyclopropyl-, Cyclobutyl-, Cyclopentyl-, Cyclohexyl- und Cycloheptylgruppe.

Als aromatische, 6 bis 18 Kohlenstoffatome enthaltende Gruppen sind insbesondere die Phenyl-, 2-Toluenyl-, 4-Toluenyl und die Xylenylgruppe zu erwähnen, die durch Reaktion der Hydroxylgruppen enthaltenden (Meth)acrylate mit den entsprechenden Isocyanaten eingeführt wird.

Komponente (B):

Bei den Verbindungen der allgemeinen Formel (I) für den Fall, daß n = 2 ist, handelt es sich um Umsetzungsprodukte der oben genannten Hydroxylgruppen enthaltenden Acrylate oder Methacrylate mit Isocyanaten, die erhältlich sind durch Reaktion von geeigneten Diolen mit Diisocyanaten. Bei den Diolen handelt es sich um a) Polycaprolactondiole, b) Polytetrahydrofurfuryldiole und c) spezielle Polyesterdiole.
Das Molverhältnis bei der Reaktion von den Diolen mit den Diisocyanaten kann im Verhältnis von 1:2 bis zu 1:1,1 variieren.

a) Polycaprolactondiole sind nach an sich bekannten Verfahren erhältlich durch Ringöffnungspolymerisation von Caprolacton mit geeigneten Diolen, wobei das Verhältnis von Caprolacton zum Diol 1 bis 20 beträgt, also 2 bis 40 Mol Caprolacton pro Mol Diol eingesetzt wird. Das Molekulargewicht der Polycaprolactondiole beträgt zwischen 200 und 4000.
Als Diole kommen insbesondere lineare oder verzweigte zweiwertige, 2 bis 6 Kohlenstoffatome enthaltende Alkohole in Frage, die ausgewählt sind aus Ethylenglykol, 1,2-Propandiol, 1,3-Propandiol, 1,2-, 1,3- oder 1,4-Butandiol, 1,5-Pentandiol, 2-Methyl-1,4-butandiol, 2,2-Dimethyl-1,3-Propandiol, 1,2- oder 1,6-Hexandiol, 1,10-Decandiol.
Die Reaktionsprodukte aus dem Diol und dem Caprolacton werden anschließend nach dem Fachmann bekannten Verfahren mit aromatischen, aliphatischen oder cyclischen Diisocyanaten umgesetzt. Geeignete Diisocyanate von denen sich Q und unabhängig davon auch Q' ableitet, sind ausgewählt aus 2,4-Toluendiisocyanat, 2,6-Toluendiisocyanat, 4,4'-Diphenylmethandiisocyanat (MDI), 4,4'-Dicyclohexyldiisocyanat, meta - und para-Tetramethyl-xylendiisocyanat, 3-Isocyanatomethyl-3,5,5-trimethylcyclohexylisocanat (Isophorondiisocyanat), Hexamethylendiisocyanat, 1,5-Naphthylendiisocyanat, Dianisidindiisocyanat, Di(2-isocyanatoethyl)-bicyclo[2.2.1]-hept-5-en-2,3-dicarboxylat, 2,2,4- und 2,4,4-Trimethylenhexamethylendiisocyanat und Gemischen davon.
Anschließend wird das Reaktionsprodukt aus dem Diol, dem Caprolacton und dem Diisocyanat nach an sich bekannten Verfahren mit dem Hydroxylgruppen enthaltenden Acrylat oder Methacrylat zum Polyurethan(meth)acrylat umgesetzt.

b) Der Aufbau der sich von Polytetrahydrofurfuryldiol ableitenden Verbindungen (B) erfolgt prinzipiell nach dem gleichen Schema wie unter a) beschrieben. Zunächst wird Polytetrahydrofurfuryldiol mit einem der oben unter a) genannten Diisocyanate zur Reaktion gebracht und das Reaktionsprodukt daraus mit den bereits unter a) erwähnten Hydroxylgruppen enthaltenden Acrylaten oder Methacrylaten zum Polyurethan(meth)acrylat umgesetzt. Hinsichtlich des Verfahrens zur Umsetzung von Diolen mit Diisocyanaten wird auf die dem Fachmann bekannte einschlägige Fachliteratur verwiesen. Das Molekulargewicht der Produkte beträgt zwischen 200 und 4500.

c) Durch den Einsatz der obengenannten Polyurethan(meth)acrylate der allgemeinen Formel II auf Basis spezieller Polyesterdiole werden besonders gute Eigenschaften, insbesondere hinsichtlich der Hydrophobierung erreicht. Diese Polyurethan(meth)acrylate weisen eine besondere elastifizierende Wirkung auf.

Bei diesen Polyurethan(meth)acrylaten handelt es sich um Verbindungen der allgemeinen Formel II

$$[H_2C=CR^1-C(=O)-O-R^2-O-C(=O)-NH-Q-NH-C(=O)]_2[\{-O-R^{4a}-O-C(=O)-NH-Q'- NH-C(=O)\}_m-O-R^{4a}-O-] \qquad (II)$$

wobei $R^1$, $R^2$, Q, Q' und m den oben genannten Definitionen entsprechen.
$R^4$ entspricht Polyesterdiol-Resten, die sich von Polyesterdiolen ableiten, die gekennzeichnet durch ein C:O-Verhältnis von > 2,6, vorzugsweise > 3,0 und ein C:H-Verhältnis von < 10. Ferner zeichnen sich diese Polyesterdiole durch ein Molekulargewicht von 1000 bis 20000, insbesondere von 1000 bis 10000 aus.
Die Herstellung dieser speziellen Polyesterdiole erfolgt durch Umsetzung von langkettigen Diolen, insbesondere Dimerdiol (hydrierte Dimerfettsäure) mit kürzerkettigen 4 bis 8 Kohlenstoffatome enthaltenden Dicarbonsäuren oder deren Anhydriden, insbesondere Bernsteinsäure oder Bernsteinsäureanhydrid. Die Polyesterdiole können auch hergestellt werden durch Umsetzung von kürzerkettigen 4 bis 8 Kohlenstoffatome enthaltenden Diolen, insbesondere 1,6-Hexandiol mit langkettigen Fettsäuren, insbesondere Dimerfettsäure-Gemisch aus dimerisierten Fettsäuren von acyclischen und cyclischen Dicarbonsäuren mit durchschnittlich 36 Kohlenstoffatomen. Es können aber auch Gemische aus langkettigen Diolen mit kürzerkettigen Diolen eingesetzt werden, wie insbesondere Gemische aus

6

Hexandiol und Polyethylenglykol oder aus Dimerdiol und Diethylenglykol.

Allgemein als Diole besonders bevorzugt sind lineare oder verzweigte $C_2$-$C_{44}$-Alkyldiole wie Ethylenglykol, 1,2- oder 1,3-Propylenglykol, 1,2-, 1,3- oder 1,4-Butandiol, Neopentylglykol, 1,2- oder 1,6-Hexandiol, 1,10-Decandiol, 1,12-Octadecandiol. In Frage kommen aber auch cyclische $C_6$-$C_{44}$-Alkyldiole.

Ferner bevorzugt sind Ethergruppen enthaltende Diole, wie beispielsweise Di-, Tri- oder Tetraethylen- oder propylenglykol oder deren oligomeren Homologen.

Allgemein als Dicarbonsäure besonders bevorzugt sind lineare, oder verzweigte $C_2$-$C_{44}$-Alkyldicarbonsäuren, wie Oxalsäure, Malonsäure, Bernsteinsäure, Glutarsäure, Adipinsäure, Pimelinsäure, Korksäure, Azealinsäure, Nonandicarbonsäure, Decandicarbonsäure, Undecandicarbonsäure oder deren technische Gemische. Zur Reaktion mit den Diolen können ebenfalls ungesättigte $C_4$-$C_{44}$-Dicarbonsäuren, wie Maleinsäure, Fumarsäure, Itaconsäure oder Aconitsäure eingesetzt werden.

Die Veresterung kann nach an sich bekannten Verfahren in Gegenwart eines Katalysators in einem geeigneten Lösungsmittel bei erhöhter Temperatur unter azeotroper Entfernung des Reaktionswassers erfolgen. Als Katalysator ist Zinn(II)octoat und als Lösungsmittel Xylen bevorzugt.

Die so gewonnenen Polyesterdiole werden dann mit einem der oben unter a) genannten Diisocyanate umgesetzt und anschließend mit den bereits unter a) erwähnten Hydroxylgruppen enthaltenden Acrylaten oder Methacrylaten zum Polyurethan(meth)acrylat umgesetzt. Eine oder mehrere dieser auf den speziellen Polyesterdiolen basierenden Polyurethan(meth)acrylate können im Gemisch mit Aktivatoren und gegebenenfalls weiteren üblichen Zusätzen als Klebstoffzusammensetzung eingesetzt werden.

Bei den Verbindungen der allgemeinen Formel (I) für den Fall, daß n = 3 ist, handelt es sich um Umsetzungsprodukte der oben genannten Hydroxylgruppen enthaltenden Acrylate oder Methacrylate mit Isocyanaten, die erhältlich sind durch Umsetzung von geeigneten 3 bis 6 Kohlenstoffatome enthaltenden, linearen oder verzweigten dreiwertigen Alkoholen (Triolen) mit Caprolacton und anschließender Reaktion mit Diisocyanaten.

Polycaprolactontriole sind nach an sich bekannten Verfahren erhältlich durch Ringöffnungspolymerisation von Caprolacton mit geeigneten Triolen, wobei das Verhältnis von Caprolacton zu Triol 1 bis 10 beträgt, also 3 bis 30 Mol Caprolacton mit einem Mol Triol umgesetzt werden.

Als Triole kommen insbesondere solche in Frage, die ausgewählt sind aus Glycerin, 1,2,4-Butantriol, Trimethylolpropan (2-Hydroxymethyl-2-ethyl-1,3-propandiol) und Trimethylolethan (2-Methyl-2-hydroxymethyl-1,3-propandiol).

Die Reaktionsprodukte aus dem Triol und dem Caprolacton werden anschließend nach dem Fachmann bekannten Verfahren mit den unter a) genannten Diisocyanaten umgesetzt. Anschließend wird das Reaktionsprodukt aus dem Triol, dem Caprolacton und dem Diisocyanat nach an sich bekannten Verfahren mit dem Hydroxylgruppen enthaltenden Acrylat oder Methacrylat zum Polyurethan(meth)acrylat umgesetzt.

Komponente (C):

Die Klebstoffzusammensetzung kann ferner ein oder mehrere Acrylat- oder Methacrylat-Comonomere (C) enthalten. Diese Monomere (C) sind ausgewählt aus Allylacrylat, Allylmethacrylat, Methylacrylat, Methylmethacrylat 2-Hydroxyethylacrylat, 2-Hydroxyethylmethacrylat, 2- oder 3-Hydroxypropylacrylat, 2- oder 3-Hydroxypropylmethacrylat, 6-Hydroxyhexylacrylat, 6-Hydroxyhexylmethacrylat, Benzylmethacrylat, Phenylethylmethacrylat, 2-Phenoxyethylmethacrylat, Morpholinoethylmethacrylat, Glycidylmethacrylat, Piperidylacrylamid, Neopentylmethacrylat, Cyclohexylmethacrylat, tert.-Butylmethacrylat und Tetrahydrofurfurylmethacrylat oder Gemischen davon.

Vorzugsweise enthält die erfindungsgemäße Zusammensetzung 10 bis 70 Gew.-% einer oder mehrerer der Verbindungen (8) und 90 bis 30 Gew.-% einer oder mehrerer der Verbindung (A) und/oder (C) bezogen auf die Gesamtmenge (A)+(B)+(C).

Die erfindungsgemäßen Klebstoffzusammensetzungen können als radikalisch polymerisierbare Einkomponenten- oder Mehrkomponentensysteme, insbesondere Zweikomponentensysteme eingesetzt werden. In beiden Fällen kommt jedoch jeweils ein Starter- oder Aktivatorsystem zum Einsatz, welches die Polymerisation an olefinisch ungesättigten Systemen auslöst. Derartigen Aktivatoren ist die Fähigkeit immanent, durch Zutritt von Umgebungsluft aktivierbar zu sein, wobei diese Aktivierung in bevorzugten Ausführungsformen schon bei Raumtemperatur eintreten soll. Derartige Aktivatorsysteme bestehen in der Regel aus einer Starterkomponente und einer Beschleunigerkomponente.

Einkomponentige Klebstoffsysteme sollen lagerstabil sein, in ihrer Applikationsform formbar, insbesondere pastös bis fließfähig sein und eine zur Verarbeitung hinreichende Topfzeit aufweisen, dann aber durch die einfache Einwirkung von Umgebungsluft formstabil aushärten. Die Einkomponentenklebstoffsysteme müssen bis zum Einsatz vor dem Zutritt von Luft geschützt gehalten werden.

Die Klebstoffsysteme können aber auch als Mehrkomponenten-, und insbesondere als Zweikomponentensysteme vorgesehen sein. Zum praktischen Einsatz des Systems werden dann die Komponenten miteinander vermischt. Die offene Topfzeit des Systems kann durch geeignete Auswahl und Anpassung der Hauptkomponenten des Aktivatorsystems geregelt werden, so daß also auch hier die Auslösung der Startreaktion und damit letztlich die Aushärtung des Systems unter Umgebungsbedingungen an der Luft möglich ist. In einer Ausführungsform der Erfindung liegen die Zusammensetzungen aus Aktivatorsystem und polymerisierbaren Komponenten als auch bei Luftzutritt nicht reaktives Zweikomponentensystem vor. Hier ist dann besonders bevorzugt, die Hauptkomponenten der eingesetzten Aktivatorsysteme voneinander zu trennen. Beide Komponenten können dann im allgemeinen ethylenisch ungesättigte Reaktivmasse enthalten. Zur Verarbeitung bedarf es nur Vermischung dieser beiden getrennt gehaltenen Komponenten, der Formgebung während der offenen Topfzeit des Systems und des Zutritts der Umgebungsluft.

Die erfindungsgemäß einsetzbaren Aktivatorsysteme lassen sich in Bezug auf den Härter (Starter) in Peroxidsysteme und Hydrazonsysteme einteilen.

Die Peroxid- bzw. Hydroperoxid- initiierte Härtung ungesättigter, polymerisierbarer Systeme bedarf insbesondere dann ausgewählter Starter bzw. Aktivatorsysteme, wenn die Reaktionsauslösung bei niederen Temperaturen, beispielsweise bei Raumtemperatur oder nur schwach erhöhten Temperaturen erfolgen soll. Bekannt ist beispielsweise, daß ausgewählten tertiären Aminverbindungen mit partiell aromatischer Substitution am Stickstoffatom eine solche Aktivator- oder Beschleunigungsfunktion zukommt. Bekannte Aktivatoren für die Polymerisationsauslösung beispielsweise mittels Dibenzoylperoxid sind insbesondere Dimethylanilin und Dimethyl-p-toluidin.

Im Rahmen der Erfindung einsetzbare Peroxide sind insbesondere Diarylperoxide, Hydroperoxide, Persäuren und Perester wie vorzugsweise Di-tert.-butylperoxid, Dibenzoylperoxid, Cumolhydroperoxid, 2,4-Dichlorobenzoylperoxid, tert.-Butylhydroperoxid, Peroxiessigsäure, Peroxibenzoesäure, Azoisobuttersäurenitril oder tert.-Butylperacetat.

Die zweite Komponente des Aktivators des Systems wird ausgewählt aus tertiären Aminen und insbesondere Dimethylanilin und Dimethylparatoluidin, welche insbesondere für die Polymerisationsauslösung mittels Dibenzoylperoxid besonders bevorzugte Beschleuniger sind.

Als Beschleuniger in Kombination mit Peroxiden können auch Schwermetallsalze oder deren Lösungen eingesetzt werden, wobei neben Co - insbesondere Kupfer(II)salze (z.B. Kupfer(II)naphthenat) zu erwähnen sind.

Im Rahmen der Erfindung können auch Hydrazone als Starter oder Hauptkomponente in Aktivatorsystemen für die Aushärtung der ungesättigten Verbindungen mittels Umgebungsluft eingesetzt werden. Die Hydrazonverbindungen werden bevorzugt mit im System wenigstens anteilsweise löslichen Metallverbindungen für die Beschleunigung eingesetzt.

Die erfindungsgemäß bevorzugt eingesetzten Hydrazonkomponenten entsprechen der nachfolgenden allgemeinen Formel III

$$R^5R^6C=N\text{-}NH\text{-}R^7 \tag{III}$$

In dieser Ausführungsform haben die Reste $R^5$, $R^5$ und $R^7$ aus dieser allgemeinen Formel (III) die nachfolgende Bedeutung:

$R^5$ ist ein geradkettiger, verzweigter oder cyclischer und gegebenenfalls substituierter Alkylrest oder ein gegebenenfalls substituierter Arylrest.

$R^6$ kann in seiner Bedeutung gleich oder verschieden sein von dem Rest $R^5$ und ist dabei Wasserstoff, ein geradkettiger, verzweigter oder cyclischer und gegebenenfalls substituierter Alkylrest oder ein gegebenenfalls substituierter Arylrest.

In einer besonderen Ausführungsform können die Reste $R^5$ und $R^6$ auch zusammen mit dem gemeinsamen substituierten C-Atom einen cycloaliphatischen Rest bilden, der auch substituiert sein kann.

Der Rest $R^7$ ist wieder ein geradkettiger, verzweigter oder cyclischer und gegebenenfalls substituierter Alkylrest oder ein gegebenenfalls substituierter Arylrest.

Die Reste $R^5$, $R^6$ und $R^7$ können insgesamt oder wenigstens anteilsweise gleich sein, jeder dieser Reste kann sich aber auch von den beiden anderen Resten in seiner Struktur unterscheiden. Als Alkylreste kommen insbesondere geradkettige und/oder verzweigte Alkylreste mit bis zu 40 C-Atomen, vorzugsweise bis zu etwa 20 C-Atomen, in Betracht. Cyclische Reste bestimmen sich in ihrer Mindestkohlenstoffzahl durch die Stabilität des jeweiligen Ringsystems. Eine bevorzugte Untergrenze liegt hier bei 5 und insbesondere bei 6 C-Atomen.

Die Reste $R^5$, $R^6$ und $R^7$ können unsubstituiert oder substituiert sein. Zu berücksichtigen ist hier, daß durch Substitution dieser Reste und insbesondere des Restes $R^7$ ein gewisser Einfluß auf die Reaktivität des Aktivatorsystems genommen werden kann. Liegt beispielsweise als Rest $R^7$ ein aromatisches System, insbesondere ein Phenylrest vor, so kann durch geeignete Substitution dieses Phenylrestes eine Reaktionsbeschleunigung dadurch erreicht werden, daß an sich bekannte elektronenschiebende Substituenten an diesem Phenylrest in $R^7$ vorgesehen werden.

Elektronenschiebende und damit reaktionsbeschleunigenden Substituenten sind beispielsweise Alkyl-, Alkoxy- und/oder Halogensubstituenten am Phenylrest in $R^7$, umgekehrt wirken stark elektronenziehende Substituenten von der Art der $-NO_2$-Gruppe verlangsamend auf den Reaktionsablauf ein. Zu solchen elektronenschiebenden bzw. elektronenziehenden Effekten durch Substitution und zur Struktur der jeweiligen Substituenten besteht umfangreiches allgemeines Fachwissen, auf das hier verwiesen wird.

Für weitere Einzelheiten und insbesondere hinsichtlich der Herstellung dieser Hydrazone wird auf die WO-A-91/10687 verwiesen.

Ferner können Hydrazone folgender allgemeiner Formel

$$Ph(-C(R^8)=N-NHR^9)_q$$

eingesetzt werden,
wobei

q       eine Zahl von 1 bis 3
$R^8$       H oder eine Alkylgruppe mit bis zu 40 C-Atomen ist und
$R^9$       unabhängig von den übrigen Substituenten H oder eine aromatische oder aliphatische Gruppe mit bis zu 40 C-Atomen ist.

Diese Hydrazon-Verbindungen sind mono-, di- oder trifunktionell. Die Reste $R^8$ und $R^9$ sind vorzugsweise lineare und/oder cyclische Alkylgruppen mit bis zu 40 C-Atomen, insbesondere mit 3 bis 8 C-Atomen. Mindestens ein $R^9$-Rest pro Molekül sollte eine solche Alkylgruppe sein. Die Reste $R^8$ und $R^9$ können unsubstituiert oder substituiert sein. Zu berücksichtigen ist hierbei, daß durch die Substitution dieser Reste, insbesondere des Restes $R^9$, ein gewisser Einfluß auf die Reaktivität des Aktivatorsystems genommen werden kann. Liegt beispielsweise ein aromatisches System, insbesondere ein Phenylrest vor, so kann durch geeignete Substitution dieses Phenylrestes eine Reaktionsbeschleunigung dadurch erreicht werden, daß an sich bekannte Elektronen-schiebende Substituenten an diesem Phenylrest in $R^9$ vorgesehen werden.

Elektronenschiebende und damit reaktionsbeschleunigende Substituenten sind beispielsweise Alkyl-, Alkoxy- und/oder Halogensubstituenten am Phenylrest in $R^9$. Umgekehrt wirken stark elektronenziehende Substituenten von der Art der -$NO_2$-Gruppe verlangsamend auf den Reaktionsablauf ein. Zu solchen elektronenschiebenden bzw. elektronenziehenden Effekten durch Substitution und zur Struktur der jeweiligen Substituenten besteht umfangreiches allgemeines Fachwissen, auf das hier verwiesen wird.

Auch dem Rest $R^8$ aus der allgemeinen Formel kann durch Wahl der jeweiligen Konstitution und der gegebenenfalls vorgesehenen Substitution die Geschwindigkeit des Reaktionsablaufes beeinflussende Wirkung zukommen.

Zur außerordentlichen Vielgestaltigkeit für die bestimmte Beschaffenheit der Reste $R^8$ und $R^9$ aus den Verbindungen der allgemeinen Formel gibt die US-PS-4 010 152 mit ihren Formelbildern aus den Spalten 6 bis 14 Aufschluß. Dargestellt sind hier die Hydrazonverbindungen bereits in Form ihrer Hydroperoxide, wie sie sich auch erfindungsgemäß im Reaktionsablauf in situ bei Zutritt von Luftsauerstoff bilden. Die umfangreichen Angaben dieser zuletzt genannten Druckschrift zu der bestimmten Beschaffenheit der Hydrazonverbindungen bzw. der aus ihnen in situ entstehenden Hydroperoxide gelten für die Lehre der Erfindung im Zusammenhang mit der Definition der Verbindungen der allgemeinen Formel. Aus Zweckmäßigkeitsgründen wird auf diese ausführliche druckschriftliche Darstellung im Zusammenhang mit der Erfindungsbeschreibung Bezug genommen. Selbstverständlich kann der Benzol-Ring noch weitere Substituenten enthalten, wenn sie die Starter-Funktion nicht stören.

Konkrete Beispiele sind: Acetophenon-methylhydrazon (q = 1, $R^8$ = $R^9$ = $CH_3$), Acetophenon-t-butylhydrazon (q = 1, $R^8$ = $CH_3$, $R^9$ = $C(CH_3)_3$).

Für weitere Einzelheiten und insbesondere hinsichtlich der Herstellung dieser Hydrazone wird auf die WO-A-93/01218 verwiesen. Die im System wenigstens anteilsweise löslichen Metallverbindungen zeichnen sich dadurch aus, daß vor allem Metallverbindungen solcher Metalle eingesetzt werden, die in mehreren Wertigkeitsstufen auftreten können. Besonders aktiv können hier ausgewählte Vertreter der Übergangsmetalle sein. Der jeweiligen Auswahl des Metalls kann unter anderem geschwindigkeitsbestimmender Charakter zur Polymerisationsauslösung zukommen. Bei Raumtemperatur hochaktive Komponenten leiten sich z.B. vom Kupfer, Kobalt, Vanadium und/oder Mangan ab. Verbindungen des Eisens kommt allerdings eine besondere Bedeutung und gute Reaktionsbeschleunigung zu.

Für das für viele Anwendungsgebiete besonders vorteilhafte Arbeiten bei Raumtemperatur eignen sich insbesondere Eisen-, Kobalt- und/oder Manganverbindungen, gegebenenfalls in Abmischung mit weiteren metallischen Komponenten wie Verbindungen des Blei, Cer, Calcium, Barium, Zink und/oder Zirkon. Es kann hier auf die einschlägige Fachliteratur verwiesen werden, vergleiche beispielsweise die zitierte Veröffentlichung in "Ullmann Encyklopädie der technischen Chemie", 4. Auflage, Band 23 (1983), Seiten 421 bis 424 sowie die dort zitierte Literatur.

Die hier betroffenen Metalle werden in Form solcher Verbindungen eingesetzt, daß sie wenigstens anteilsweise im Gesamtsystem löslich sind. Es kommen dabei sowohl seifenartige Metallverbindungen als auch in anderer Form insbesondere komplex an organische Reste gebundene Typen in Betracht. Typische Beispiele für das Arbeiten im Sinne des erfindungsgemäßen Handelns ist die Verwendung entsprechender Metallnaphthenate bzw. Metallacetylacetonate. Besteht eine hinreichende Löslichkeit von anorganischen Salzen im System dann ist allerdings auch die Verwendung solcher anorganischer Systeme möglich. Ein typisches Beispiel hierfür ist das Eisenchlorid, das bei seinem Einsatz im erfindungsgemäßen System eine deutlich beschleunigende Wirkung zeigt.

Es kann zweckmäßig sein, die Metallverbindungen jeweils in einer niedrigen Wertigkeitsstufe des Metalls - beispielsweise also als Kobalt (II) oder Mangan (II) - einzusetzen. In anderen Fällen eignet sich auch die Verwendung der Metallverbindung in der höheren Wertigkeitsstufe des Metalls. So kann beispielsweise Eisen auch in Form der $Fe^{3+}$-Verbindungen verwendet werden.

Reduktionsmittel mit Beschleuniger-Wirkung können gewünschtenfalls als Aktivatorkomponente mitverwendet werden. Diese werden in üblichen Redoxsystemen zur Polymerisationsauslösung eingesetzt. Verwiesen wird auf die einschlägige umfangreiche Literatur, beispielsweise W. Kern, Makromol. Chem. 1, 249 (1947) sowie C. Srna, Angew. makromol. Chem. 9, 165 (1969) sowie das allgemeine Fachwissen, wie es z.B. beschrieben ist in Houben Weyl "Methoden der organischen Chemie" Band 14/1, 263 bis 297.

Als besonders aktiv hat sich hier die Klasse der Alpha-Hydroxyketone, beispielsweise mit ihren Vertretern Butyroin, Benzoin oder Azetoin erwiesen. Wesentlich ist, daß diese Stoffklasse in den erfindungsgemäß eingesetzten Aktivatorsystemen zwar eine wichtige reaktionsbeschleunigende Funktion übernehmen können, daß jedoch ihre Mitverwendung nicht zwingend ist.

Starter bzw. Aktivatorsysteme aus den hier geschilderten Hauptkomponenten Hydrazonverbindung, wenigstens anteilsweise löslicher metallischer Trockenstoff und/oder gewünschtenfalls mitverwendeter Beschleuniger können anstelle der peroxidischen Startersysteme eingesetzt werden.

In den Zusammensetzungen der Erfindung machen die Peroxid- und Hydrazon-Aktivatorgemische bevorzugt nicht mehr als etwa 15 Gew.-% und insbesondere nicht mehr als etwa 10 Gew.-%- jeweils bezogen auf das Gesamtsystem aus. Je nach Aktivität der eingesetzten Komponenten kann dabei das Gewicht des Aktivatorgemisches sehr stark abgesenkt werden und beispielsweise bis in den Bereich von etwa 0,1 Gew.-% oder wenigstens etwa 0,5 Gew.-% verringert werden. Besonders geeignet können Mengen des Aktivatorsystems von wenigstens etwa 1 Gew.-% bevorzugt bis zu etwa 8 Gew.-% sein.

Die drei zuvor genannten Komponenten des Hydrazon-Aktivatorsystems können dabei vorzugsweise in den folgenden Mengenverhältnissen eingesetzt werden:

Hydrazon-Verbindungen: wenigstens etwa 0,1 Gew.-%, zweckmäßig 0,5 bis 7,5 Gew.-%, vorzugsweise 1 bis 4 Gew.-% Metall aus löslicher Metallverbindung: 0 bis einige Gew.-%, zweckmäßig etwa 50 ppm bis 1 Gew.-%, vorzugsweise mehr als 100 ppm, z.B. 1000 bis 5000 ppm. Reduktionsmittel: 0 bis 5 Gew.-%, vorzugsweise 1 bis 3 Gew.-%, jeweils bezogen auf das Gesamtgemisch.

Zur Steuerung des Reaktionsablaufs und/oder der offenen Topfzeit können in an sich bekannter Weise Inhibitoren und/oder Stabilisatoren gegen vorzeitige Auslösung der radikalischen Reaktion mitverwendet werden. Ihre Menge bemißt sich nach dem angegebenen Zweck. Sie kann im Einzelfall durch fachgerechte Überlegungen und/oder durch Vorversuche einfach ermittelt werden. Die mitverwendeten Stabilisatoren werden üblicherweise wenige Prozent - z.B. etwa 2 bis 5 Gew.-% - des Gesamtgemisches nicht überschreiten und liegen im allgemeinen unterhalb 1 Gew.-%, bezogen auf das Gesamtgemisch.

Die Erfindung erlaubt jeweils die Zusammenstellung optimierter Klebstoffzusammensetzungen. Unter Wahrung der erfindungsgemäßen Gesetzmäßigkeiten können lösliche und/oder unlösliche Füllstoffe, Elastifizierungsmittel, Verdickungsmittel, Thixotropierungsmittel, Pigmente, Haftvermittler, Stabilisatoren und dergleichen mitverwendet werden, ohne daß die Funktionsfähigkeit der erfindungsgemäßen Zusammensetzungen gefährdet ist. Voraussetzung hierfür ist natürlich, daß durch Auswahl der Hilfs- und Füllstoffe sichergestellt ist, Störungen in der Interaktion der Aktivatorkomponenten auszuschließen. Hierzu gilt allgemeines chemisches Wissen.

Zur Inhibierung der erfindungsgemäßen Systeme stehen in an sich bekannter Weise mehrere Mechanismen zur Verfügung. Genannt seien die beiden folgenden Grundtypen:

1. Stabilisierung gegen $O_2$, Zusatz von Antioxidantien und
2. Stabilisierung gegen Radikale, Zusatz von Radikalinhibitoren.

Aus dem allgemeinen chemischen Wissen seien im nachfolgenden typische Stabilisatorkomponenten aufgezählt, wobei jeweils in Klammern hinter der speziellen Verbindung angegeben ist, welchem Mechanismus der Stabilisator zuzuordnen ist:

Pyrogallol (1), $O_2$-inhibierte Acrylate (1), Hydrochinon (1,2), Hydrochinonmonomethylether (1,2), Butylhydroxytoluen (2) und Phenothiazin (2). Besondere Bedeutung zur Stabilisierung des Systems gegen unerwünschte vorzeitige Abreaktion kann Verbindungen vom Typ des Triphenylphosphins sowie NaI und $I_2$ zukommen.

Die erfindungsgemäße Zusammensetzung kann als aerob härtendes Klebstoffsystem, streichfähiges Mittel für die Oberflächenbeschichtung mit polymerisierbaren insbesondere lösungsmittelfreien Lacken und Anstrichmittel im Sinne von streichfähigen lufttrocknenden Lacksystemen, für die Herstellung von Formteilen unter Reaktionsauslösung durch Einwirkung von Umgebungsluft, beispielsweise auf Basis von Styrol/ungesättigte Polyesterharze sowie als Dichtungsmasse und in Druckfarben verwendet werden.

Zur Herstellung der erfindungsgemäßen Klebstoffzusammensetzungen werden die radikalisch polymerisierbare Verbindung oder die Verbindungen mit dem Aktivatorsystem und den gegebenenfalls weiteren Zusätzen in den gewünschten Anteilen in einer Rührapparatur homogenisiert. Bei Einkomponentenklebstoffzusammensetzungen ist darauf zu achten, daß das Homogenisieren unter Ausschluß von Luftsauerstoff stattfindet. Hierzu hat es sich als zweckmäßig erwiesen, die Rührapparatur mit den polymerisierbaren Verbindungen vor dem Zusatz der letzten Aktivatorkomponente (bei Härter- Beschleunigerkombinationen) zu evakuieren und dann mit Stickstoff zu belüften. Dieser Vorgang kann gegebenenfalls mehrfach wiederholt werden.

Zur Herstellung der Zweikomponentensysteme sind diese Vorkehrungen nicht erforderlich. Hier wird das aus Härter und Beschleuniger bestehende Aktivatorsystem erst bei der tatsächlichen Anwendung der Klebstoffzusammensetzung gemischt, so daß die eine Komponente des Aktivatorsystems alleine oder im Gemisch mit der polymerisierbaren Verbindung zum anderen Teil der polymerisierbaren Verbindung gegeben wird, die die zweite Komponente des Aktivatorsystems enthält.

Die erfindungsgemäßen Zusammensetzungen sind geruchsarm, elastifizierend, flüssig oder pastös und deren ausgehärtete Massen weisen eine gute Feuchtigkeitsbeständigkeit auf. Ferner können sie problemlos als Ein- oder Zweikomponentensystem formuliert werden und weisen auf Glas, Keramik, Metallen, Kunststoffen und Cellulose enthaltenden Materialien, wie Holz oder Papier eine hervorragende Adhäsion auf. Dies zeigt sich insbesondere durch die ermittelten Zugscherfestigkeiten auf Eisenblechen nach DIN 53281 (Herstellung der Prüfkörper) und DIN 52283 (Ermittlung der Zugscherfestigkeit). Die nachfolgenden Beispiele erläutern die Erfindung ohne sie jedoch zu beschränken.

Beispiele:

I) Urethan(meth)acrylate und deren Herstellung:

Beispiel 1 (Herstellung des Monomeren):

1,05 mol Hydroxypropylacrylat wird bei 55% unter $N_2$ gerührt und portionsweise mit insgesamt 1 mol Phenylisocyanat versetzt. Die Zugabe erfolgt so, daß die Reaktionstemperatur 80°C nicht überschreitet. Nach beendeter Zugabe wird 1 Stunde bei 70% weitergerührt. Danach ist kein freies NCO mehr nachweisbar.Das Produkt hat eine Viskosität von 1000 mPas.

Es wird mit 100 ppm Hydrochinonmonomethylether stabilisiert. Des weiteren wurden nachfolgende Urethan(meth)acrylate ausgehend von folgenden Ausgangsverbindungen hergestellt:

Tabelle 1

| Isocyanat | (Meth)acrylat | Smp. [°C ] |
|---|---|---|
| a) Phenylisocyanat | Hydroxyethylacrylat | 63-65 |
| b) Phenylisocyanat | Hydroxypropylacrylat | viskose Fl. |
| c) Phenylisocyanat | Hydroxyethylmethacrylat | 55 |
| d) Phenylisocyanat | Hydroxypropylmethacrylat | 62-64 |
| e) Cyclohexylisocyanat | Hydroxyethylmethacrylat | 56 |

Beispiel 2 (Verwendung als Klebstoff):

Zweikomponenten-Klebstoffmischungen mit Dibenzoylperoxid und tertiärem Amin als Starter und Methacryloyloxyethylphosphat als Haftvermittler ergeben auf gestrahlten Eisenblechen Zugscherfestigkeiten um 15 N/mm$^2$. Durch Zusatz von mit aushärtenden elastifizierenden Zusätzen (z.B. methacrylatterminierte Polyetherpolyurethane) lassen sich die Festigkeiten auf über 20 N/mm$^2$ steigern. Eine vergleichbare Mischung auf MMA-Basis zeigt Zugscherfestigkeiten von 26 N/mm$^2$.

Es wurde ein Zweikomponenten-Klebstoff hergestellt:

| Komponente a: | Monomer aus Beispiel 1 | 50 Teile |
|---|---|---|
| | Dibenzoylperoxid | 0,42 Teile |
| Komponente b: | Monomer aus Beispiel 1 | 50 Teile |
| | N,N-Dimethyltoluidin | 0,21 Teile |

Komponente a und b werden im Verhältnis 1:1 gemischt und mit 1 Teil Methacryloyloxyethylphosphat (Haftvermittler) versetzt. Die Zugscherfestigkeiten an gesandstrahlten Eisenblechen (DIN 52283) wurden nach 1 Tag gemessen (Tabelle 2).

Mit Acetophenon-tert.-Butylhydrazon (APtBH) als Hydrazon können mit N-Phenyl-methacryloyl-ethylcarbamat und N-Phenyl-acryloyl-ethyl-carbamat Eisenverklebungen (5 Minuten offene Zeit) mit Zugscherfestigkeiten von 5-10 N/mm$^2$ hergestellt werden.

Beispiel 3:

Anstelle von Monomer 1 wurde in der Zweikomponenten-Rezeptur von Beispiel 2 eine Mischung von Monomer 1 und dem Umsatzprodukt aus Hydroxyethylacrylat und Phenylisocyanat (Tabelle 1,a)) eingesetzt.

Beispiel 4:

Anstelle von Monomer 1 wurde in der Zweikomponenten-Rezeptur von Beispiel 2 eine Mischung von Monomer 1 und einem methacrylatterminierten Poly-THF 2000 Zusammensetzung: HEMA - TDI - PolyTHF 2000 - TDI - HEMA (HEMA = Hydroxyethylmethacrylat) im Verhältnis 8:2 eingesetzt.

Tabelle 2

| Beispiel | Zugscherfestigkeit Eisen/Eisen (N/mm$^2$) |
|---|---|
| 2 | 15,2 |
| 3 | 16,1 |
| 4 | 20,2 |

II) Herstellung der Polyesterdiole:

Beispiel 5:

446,6 g Dimerdiol (hydrierte Dimerfettsäure) und 60 g Bernsteinsäureanhydrid werden mit 50 g Xylol und 0,5 g Sn(II)octoat werden für 7 Stunden am Wasserabscheider auf 185°C erhitzt. Anschließend wird das Xylol im Wasserstrahlvakuum abdestilliert, wobei die Badtemperatur bis auf 210°C erhöht wird. Das so erhaltene Produkt weist eine Säurezahl (SZ) von 0,9 und eine OH-Zahl (OHZ) von 47 auf, was einem mittleren Molekulargewicht von 2400 entspricht. Gehalt: 78,53 %C 12,08 %H 9,39 %O C:O=8,36; C:H=6,5

Beispiel 6:

446,6 g Dimerdiol, 70 g Bernsteinsäureanhydrid und 0,5 g Sn(II)octoat werden analog Beispiel 5 umgesetzt. Das resultierende Polyesterdiol weist eine SZ von 1,7, eine OHZ von 25 und ein mittleres Molekulargewicht von 4500 auf. Gehalt: 78,19 %C 11,92 %H 9,89 %O C:O=7,9; C:H=6,56

**12**

Beispiel 7:

97,5 g Hexandiol und 400,7 g Dimerfettsäure VD 288 werden mit 100 g Xylol und 0,5 g Sn(II)octoat 7 h bei 195°C am Wasserabscheider erhitzt. Anschließend wird das Xylol abdestilliert, das resultierende Polyesterdiol weist eine SZ von 0,1 eine OHZ von 19,1 und ein mittleres Molekulargewicht von 5900 auf. Gehalt: 77,62 %C 12,15 %H 10,23 %O C:O=7,6; C:H=6,4

Beispiel 8:

97,5 g Hexandiol-1,6 und 343,5 g Dimerfettsäure werden analog Beispiel 7 umgesetzt. Das Polyesterdiol weist eine SZ von 0,3, eine OHZ von 55 und ein mittleres Molekulargewicht von 2000 auf. Gehalt: 76,99 %C 12,14 %H 10,88 %O C:O=7,08; C:H=6,34

Beispiel 9:

118,2 g Hexandiol, 626 g Polyethylenglykol (MW 600) und 858 g Dimerfettsäure werden analog den Beispielen 7 und 8 umgesetzt. Das Polyesterdiol hat eine SZ von 1,2, eine OHZ von 37 und ein mittleres Molekulargewicht von 3000. Gehalt: 68,5 %C 10,78 %H 20,73 %O C:O=3,3; C:H=6,35

Beispiel 10:

446,6 g Dimerdiol, 84,9 g Diethylenglykol, 140,1 g Bernsteinsäureanhydrid und 0,7 g Sn(II)octoat werden analog den Beispielen 5 und 6 umgesetzt. Das resultierende Polyesterdiol hat eine SZ von 2,0, eine OHZ von 31 und ein mittleres Molekulargewicht von 3200. Gehalt: 71,94 %C 10,73 %H 17,33 %O C:O=4,15; C:H=6,7

Beispiel 11:

718 g (1,33 mol) Dimerdiol, 570 g (1 mol) Dimerfettsäure und 0,6 g Sn(II)octoat werden auf 150°C erhitzt. Innerhalb von 6 h wird die Temperatur auf 225°C gesteigert, wobei ab der 2. Stunde ein Vakuum von 1,333 kPa (100 Torr) angelegt wird. Nach 6 h wird für weitere 8 h im Ölpumpenvakuum auf 240°C erhitzt. Nach beendeter Reaktion weist das erhaltene Polyesterdiol eine Säurezahl von 0,5, eine OH-Zahl von 31 und ein mittleres Molekulargewicht von 36000 auf. Gehalt: 81,2 %C 12,77 %H 6 %O C:O=13,5; C:H=6,36

III) Herstellung der Polyurethanmethacrylate (PUMA):

Allgemeine Herstellvorschrift:

0,2 mol des Polyesterdiols werden auf 45°C erhitzt. Dazu werden innerhalb von 5 min. 0,4 mol Desmodur T 100 (2,4-Toluendiisocyanat (TDI), Handelsprodukt der Firma Bayer, Leverkusen) zugegeben, wobei die Temperatur auf maximal 55% gehalten wird. Es werden weitere 15 min. auf 55-60°C erhitzt, bis der NCO-Gehalt der Mischung 50% des Ausgangswertes erreicht hat. Dann werden 0,2 mol Hydroxypropylmethacrylat (HPMA) zugegeben und die Mischung auf 80% erhitzt, bis der NCO-Gehalt unter 0,1 % gesunken ist. Es resultiert eine 80 %ige Lösung des PUMA in überschüssigem HPMA.

Vergleichsbeispiel 12:

Es wird ein Polyurethanmethacrylat (PUMA) mit CAPA 220 (Polycaprolacton, Handelsprodukt der Firma Interox, 62,4 %C; 8,86 %H; 28,72 %O; C:O=2,17; C:H=7,05) nach obiger allgemeiner Herstellvorschrift synthetisiert.

IV) Klebstofformulierungen:

a) Allgemeine Herstellvorschriften für zweikomponentige Klebstofformulierungen:

Typ I:

Komponente A: 37,5 Gew.-Teile Methacrylat-Monomer, 62,5 Gew.-Teile PUMA (hergestellt nach den entsprechenden Beispielen), 0,5 Gew.-Teile JPA 514 (Haftvermittler: Methacryloyloxyethylphosphat, Handelsprodukt der Firma Johoku Chem.) und 1 Gew.-Teil N,N-Dihydroxyethyl-p-toluidin werden durch kräftiges Rühren homogenisiert.

Komponente B: Benzoylperoxid 20% auf Gips.

Der Klebstoff wird durch Mischen von 4 Gew.-Teile Komponente A und 1 Gew.-Teil Komponente B zur Aushärtung gebracht.

Typ II:

Komponente A: 37,5 Gew.-Teile Methacrylat-Monomer, 62,5 Gew.-Teile PUMA und 3% Trigonox K80 (Cumolhydroperoxid, 80 %ige Lösung in Cumol, Handelsprodukt der Firma Akzo) werden durch kräftiges Rühren homogenisiert.

Komponente B: 37,5 Gew.-Teile HPMA, 62,5 Gew.-Teile PUMA, 1 Gew.-Teil JPA und 1 Gew.-Teil 8 %ige Kupfer(II)naphthenat-Lösung (Soligen-Kupfer, Handelsprodukt der Firma Borchers) werden durch Rühren homogenisiert.

Der Klebstoff wird durch Mischen gleicher Volumina der Komponenten A und B zur Aushärtung gebracht.

b) Allgemeine Hersteilvorschrift für einkomponentige Reaktionsklebstoffe:

Typ III:

37,5 Gew.-Teile Methacrylat-Monomer, 62,5 Gew.-Teile PUMA, 0,5 Gew.-Teile JPA 514, 1 Gew.-Teil Eisen(III)acetylacetonat und 0,1 Gew.-Teile Natriumiodid werden in einer Rührapparatur homogenisiert, evakuiert und anschließend mit Stickstoff belüftet. Zum völligen Ausschluß von Sauerstoff wird dieser Vorgang noch zweimal wiederholt. Dann werden im Stickstoffgegenstrom 3 Gew.-Teile Acetophenon-tert.-butylhydrazon zugegeben und die Mischung nochmals unter Rühren evakuiert und mit Stickstoff belüftet.

Zur Aushärtung bzw. Verklebung wird der Klebstoff auf die Fügeteile aufgetragen (2,4 g/m$^2$), 5 Minuten der Umgebungsluft ausgesetzt und anschließend die zu verklebenden Teile gefügt und fixiert.

Typ IV:

Vorgehen und Bestandteile analog Typ III, lediglich wird Acetophenon-methylhydrazon anstelle des entsprechenden tert.-Butylhydrazons verwendet.

Die Zugscherfestigkeiten werden nach DIN 53283 an einschnittig überlappten (250 mm$^2$) Proben durchgeführt. Die Feuchtebeständigkeit wird durch Messung der Zugscherfestigkeit nach einer Klimalagerung der ausgehärteten Verklebung von 10 Tagen bei 40% und 99% relativer Luftfeuchtigkeit bestimmt. Die Schälfestigkeiten werden nach DIN 53282 an Blechwinkeln nach 72 h Lagerung bei RT bestimmt.

Die Ergebnisse der Zugscherfestigkeitsprüfung mit und ohne Klimalagerung sowie der Winkelschälversuche sind in nachfolgender Tabelle 3 dargestellt:

Tabelle 3

| PUMA mit Polyesterdiol nach Beispiel Nr. | Klebstofftyp | Methacrylatmonomer | Zugscherfestigkeit nach 24 h RT | [N/mm$^2$] nach Klimatest | Winkelschälfestigkeit [N/mm] |
|---|---|---|---|---|---|
| 5 | I | HPMA | 15,3 | 12,9 | 3,5 |
| 6 | I | MMA | 17,5 | 14,9 | 5,2 |
| 6 | I | 2-Phenoxyethylmethacrylat | 14,8 | 11,9 | 5,1 |
| 7 | I | 2-Phenoxyethylmethacrylat | 12,2 | 9,8 | 4,7 |
| 8 | I | HPMA | 16,3 | 14,6 | 6,3 |
| 8 | III | HPMA | 14,3 | 11,8 | 2,9 |
| 9 | I | HPMA | 13,2 | 12,1 | 5,6 |
| 10 | I | HPMA | 19,5 | 17,2 | 5,7 |
| 10 | II | HPMA | 17,8 | 15,4 | 5,2 |
| 10 | III | HPMA | 21,0 | 18,9 | 3,1 |

Tabelle 3 (fortgesetzt)

| PUMA mit Polyesterdiol nach Beispiel Nr. | Klebstofftyp | Methacrylatmonomer | Zugscherfestigkeit nach 24 h RT | $[N/mm^2]$ nach Klimatest | Winkelschälfestigkeit [N/mm] |
|---|---|---|---|---|---|
| 10 | IV | HPMA | 13,4 | 9,8 | 3,0 |
| 11 | | | | | |
| | I | THFMA | 19,1 | 11,6 | 1,8 |
| | I | HPMA | 21,0 | 9,3 | 2,4 |
| Vergl. 12 | III | HPMA | 20,2 | 8,4 | 1,3 |
| | IV | HPMA | 21,7 | 12,4 | 2,1 |

**Patentansprüche**

1. Zweikomponentige Klebstoffzusammensetzung bestehend aus

   a) einer ersten Komponente, die eine Beschleunigerkomponente und eine radikalische polymerisierbare Verbindung der allgemeinen Formel II

$$[H_2C=CR^1\text{-}C(=O)\text{-}O\text{-}R^2\text{-}O\text{-}C(=O)\text{-}NH\text{-}Q\text{-}NH\text{-}C(=O)]_2[\{\text{-}O\text{-}R^{4a}\text{-}O\text{-}C(=O)\text{-}NH\text{-}Q'\text{-}NH\text{-}C(=O)\}_m\text{-}O\text{-}R^{4a}\text{-}O\text{-}] \quad (II)$$

   enthält und

   b) einer zweiten Komponente, die eine Starterkomponente, enthaltend mindestens eine Peroxidverbindung oder eine Hydrazonverbindung, und ggf. eine radikalische polymerisierbare Verbindung der allgemeinen Formel II

$$[H_2C=CR^1\text{-}C(=O)\text{-}O\text{-}R^2\text{-}O\text{-}C(=O)\text{-}NH\text{-}Q\text{-}NH\text{-}C(=O)]_2[\{\text{-}O\text{-}R^{4a}\text{-}O\text{-}C(=O)\text{-}NH\text{-}Q'\text{-}NH\text{-}C(=O)\}_m\text{-}O\text{-}R^{4a}\text{-}O\text{-}] \quad (II)$$

   enthält
   worin

   $m = 0$ bis 10,
   $R^1$ = Wasserstoff oder eine Methylgruppe,
   $R^2$ = eine lineare oder verzweigte Alkylgruppe mit 2 bis 6 Kohlenstoffatomen oder ein Alkylenoxid mit 4 bis 21 Kohlenstoffatomen ist,
   Q und Q' unabhängig voneinander 6 bis 18 Kohlenstoffatome enthaltende aromatische, aliphatische oder cycloaliphatische Gruppen sind, die sich von dem zugrundeliegenden Diisocyanat oder Diisocyanatgemischen ableiten und
   $R^{4a}$ von einem Polyesterdiol mit einem C:O-Gewichtsverhältnis von > 2,6, einem C:H-Gewichtsverhältnis von < 10 und einem Molekulargewicht von 1000 - 20000 abgeleitet ist.

2. Einkomponentige aerob härtbare Klebstoffzusammensetzung enthaltend ein Aktivatorsystem auf der Basis mindestens einer Hydrazonverbindung als Starter oder Hauptkomponente und eine radikalische polymerisierbare Verbindung der allgemeinen Formel II

$$[H_2C=CR^1\text{-}C(=O)\text{-}O\text{-}R^2\text{-}O\text{-}C(=O)\text{-}NH\text{-}Q\text{-}NH\text{-}C(=O)]_2[\{\text{-}O\text{-}R^{4a}\text{-}O\text{-}C(=O)\text{-}NH\text{-}Q'\text{-}NH\text{-}C(=O)\}_m\text{-}O\text{-}R^{4a}\text{-}O\text{-}] \quad (II)$$

   worin

   $m = 0$ bis 10,
   $R^1$ = Wasserstoff oder eine Methylgruppe,
   $R^2$ = eine lineare oder verzweigte Alkylgruppe mit 2 bis 6 Kohlenstoffatomen oder ein Alkylenoxid mit 4 bis 21 Kohlenstoffatomen ist,
   Q und Q' unabhängig voneinander 6 bis 18 Kohlenstoffatome enthaltende aromatische, aliphatische oder cycloaliphatische Gruppen sind, die sich von dem zugrundeliegenden Diisocyanat oder Diisocyanatgemischen ableiten und

$R^{4a}$ von einem Polyesterdiol mit einem C:O-Gewichtsverhältnis von > 2,6, einem C:H-Gewichtsverhältnis von < 10 und einem Molekulargewicht von 1000 - 20000 abgeleitet ist.

**Claims**

1. A two-component adhesive composition consisting of

   a) a first component which contains an acceleraor component and a radical-polymerizable compound corresponding to general formula II:

   $$[H_2C=CR^1-C(=O)-O-R^2-O-C(=O)-NH-Q-NH-C(=O)]_2[\{-O-R^{4a}-O- C(=O)-NH-Q-NH-C(=O)\}_m-O-R^{4a}-O-] \quad (II)$$

   and
   b) a second component which contains a starter component containing at least one peroxide compound or a hydrazone compound and optionally a radical-polymerizable compound corresponding to general formula II:

   $$[H_2C=CR^1-C(=O)-O-R^2-O-C(=O)-NH-Q-NH-C(=O)]_2[\{-O-R^{4a}-O- C(=O)-NH-Q-NH-C(=O)\}_m-O-R^{4a}-O-] \quad (II)$$

   in which

   m = 0 to 10,
   $R^1$ = hydrogen or a methyl group,
   $R^2$ = a linear or branched alkyl group containing 2 to 6 carbon atoms or an alkylene oxide containing 4 to 21 carbon atoms,
   Q and Q= independently of one another represent aromatic, aliphatic or cycloaliphatic groups containing 6 to 18 carbon atoms which are derived from the basic diisocyanate or diisocyanate mixtures and
   $R^{4a}$ is derived from a polyester diol with a C:O ratio by weight of > 2.6:1, a C:H ratio by weight of < 10:1 and a molecular weight of 1,000 to 20,000.

2. A one-component aerobically curing adhesive composition containing an activator system based on at least one hydrazone compound as starter or main component and a radical-polymerizable compound corresponding to general formula II:

   $$[H_2C=CR^1-C(=O)-O-R^2-O-C(=O)-NH-Q-NH-C(=O)]_2[\{-O-R^{4a}-O-C(=O)-NH- Q=-NH-C(=O)\}_m-O-R^{4a}-O-] \quad (II)$$

   in which

   m = 0 to 10,
   $R^1$ = hydrogen or a methyl group,
   $R^2$ = a linear or branched alkyl group containing 2 to 6 carbon atoms or an alkylene oxide containing 4 to 21 carbon atoms,
   Q and Q= independently of one another represent aromatic, aliphatic or cycloaliphatic groups containing 6 to 18 carbon atoms which are derived from the basic diisocyanate or diisocyanate mixtures and
   $R^{4a}$ is derived from a polyester diol with a C:O ratio by eight of > 2.6:1, a C:H ratio by weight of < 10:1 and a molecular weight of 1,000 to 20,000.

**Revendications**

1. Composition d'adhésif à deux composants constituée de

   a) un premier composant, qui contient un composant accélérateur et un composé polymérisable par voie radicalaire, de formule générale II

   $$[H_2C=CR^1-C(=O)-O-R^2-O-C(=O)-NH-Q-NH-C(=O)]_2[\{-O-R^{4a}-O- C(=O)-NH-Q'-NH-C(=O)\}_m-O-R^{4a}-O-] \quad (II)$$

   et

b) un second composant, qui contient un composant initiateur contenant au moins un composé peroxyde ou un composé d'hydrazone, et le cas échéant un composé polymérisable par voie radicalaire, de formule générale (II)

$$[H_2C=CR^1-C(=O)-O-R^2-O-C(=O)-NH-Q-NH-C(=O)]_2[\{-O-R^{4a}-O-\ C(=O)-NH-Q'-NH-C(=O)\}_m-O-R^{4a}-O-] \qquad (II)$$

où

m = 0 à 10,
$R^1$ représente un hydrogène ou un groupe méthyle,
$R^2$ représente un groupe alkyle linéaire ou ramifié ayant de 2 à 6 atomes de carbone ou un oxyde d'alkylène ayant de 4 à 21 atomes de carbone,
Q et Q' représentent indépendamment l'un de l'autre des groupes aromatiques, aliphatiques ou cycloaliphatiques contenant de 6 à 18 atomes de carbone, qui dérivent du diisocyanate ou de mélanges de diisocyanates qui sont à la base et
$R^{4a}$ dérive d'un polyester diol avec un rapport pondéral C:O supérieur à 2,6, un rapport pondéral C:H inférieur à 10 et un poids moléculaire de 1000 à 20 000.

2. Composition d'adhésif à un composant durcissable par voie aérobie contenant un système activateur à base d'au moins un composé d'hydrazone comme initiateur ou composant principal, et un composé polymérisable par voie radicalaire, de forme générale II

$$[H_2C=CR^1-C(=O)-O-R^2-O-C(=O)-NH-Q-NH-C(=O)]_2[\{-O-R^{4a}-O-\ C(=O)-NH-Q'-NH-C(=O)\}_m-O-R^{4a}-O-] \qquad (II)$$

dans laquelle

m = 0 à 10,
$R^1$ représente un hydrogène ou un groupe méthyle,
$R^2$ représente un groupe alkyle linéaire ou ramifié ayant de 2 à 6 atomes de carbone ou un oxyde d'alkylène ayant de 4 à 21 atomes de carbone,
Q et Q' représentent indépendamment l'un de l'autre des groupes aromatiques, aliphatiques ou cycloaliphatiques contenant de 6 à 18 atomes de carbone, qui dérivent du diisocyanate ou de mélanges de diisocyanates qui sont à la base et
$R^{4a}$ dérive d'un polyester diol avec un rapport pondéral C:O supérieur à 2,6, un rapport pondéral C:H inférieur à 10 et un poids moléculaire de 1000 à 20 000.